# EUROPEAN PATENT SPECIFICATION

(11) **EP 0 408 555 B1**
(45) Date of publication and mention of the grant of the patent: **03.03.1993**
(21) Application number: 88910408.9
(22) Date of filing: 10.11.1988
(51) Int. Cl.: B21D 51/02, B21D 51/52, A01G 9/02, A01G 9/14

(54) **METHOD OF PRODUCIND AN OBLONG PLANT TROUGH WITH END WALLS AND APPARATUS FOR THE IMPLEMENTATION OF THE METHOD**
VERFAHREN ZUR HERSTELLUNG EINES LäNGLICHEN PFLANZENKüBELS MIT ABSCHLUSSWäNDEN UND VORRICHTUNG ZU DESSEN HERSTELLUNG
PROCEDE DE FABRICATION D'UN BAC A PLANTES OBLONG AVEC DES PAROIS D'EXTREMITE ET APPAREIL DE REALISATION DUDIT PROCEDE

(30) Priority: 17.11.1987 DE 3738952
(43) Date of publication of application: 23.01.1991
(73) Proprietor: Q. TRAY LIMITED, Gibraltar (GI)
(72) Inventor: Caroe, Claus J., DK-8700 Horsens (DK)
(74) Representative: Birkeholm, Mogens
(86) International application number: DK8800187
(87) International publication number: WO8904733

(56) References cited:
- DE-A- 2 723 443
- FR-B- 1 485 685
- SE-B- 423 173
- US-A- 641 722
- US-A- 1 997 839
- US-A- 3 927 823
- US-A- 4 305 340

## Description

This invention relates to a method of producing an oblong plant trough with end walls, the plant trough having an essentially flat bottom and two parallel lengthwise side walls extending from the bottom, and the lengthwise edges of said side walls, as seen in cross section, having been doublefolded along a predetermined distance, and the plant trough being made of metal and having been formed from a flat sheet by means of a tool with folding devices.

A similar method or similar boxes or trays are known, for example, from US-A-39 27 823.

US-A-4 305 340 describes a method of producing an open metal box from a flat sheet, which is folded by means of a tool provided with folding devices to form two upright side walls. The tool then produces two folds at each end of the side walls. The first fold extends at right angles up from the bottom and at a distance from the rear edge of the side wall, which corresponds to a predetermined fold line. The second fold extends from the intersection between the first fold and the bottom section and up to the corner between the longitudinal edge and rear edge of the side wall. In a subsequent operation the triangle formed between the first and the second fold is pushed inwards in a direction towards the space between the side walls, this new operation being carried out at all four corners of the metal sheet, as a consequence of which the sections of the bottom extending towards each rear edge of the bottom from the pairs of first folds will rise at right angles in relation to the plane of the bottom and are pressed tightly together with the mentioned triangles.

In this prior art method the blank is flat and has been cut out beforehand into a rectangle or a square of a given size, In the method according to the present invention the blank used is of large length, which is subsequently provided with end walls to produce a plant trough, the finished length of which may be adapted in accordance with a given purpose as occassion may require.

US-A-641 722 describes a blank of cardboard, which is cut out and provided with fatigue or fold lines. The cardboard may then be shipped in large numbers to the user, who may then fold it into an open box for transportation and sale of fruit.

A corresponding blank is described in US-A-3 927 823. This known blank may be cardboard, aluminiumfoil or similar material, and the material is cut out and provided with fold lines, and then erected into an open box by the consumer. The blank is provided with edge flaps for apppliation of adhesive so that the box will remain securely locked in the erected condition.

The blanks described in the two last mentioned specifications are of final shape.

Plant troughs are commonly used in greenhouses for the cultivation of plants, and in the plant troughs the plants may be transported, rearranged or otherwise handled as needed for optimal care of the plants.

A plant trough of this description is oblong and has an essentially U-shaped cross section comprising a bottom and two essentially parallel lengthwise side walls, in addition to which the plant trough may be closed tightly at each end with an end wall if required in consideration of the necessary irrigation method for the cultivation of one or more plant species. In other cases it will be more appropriate to use plant troughs without end walls.

A plant trough may be made from moulded material or it may be a metal plate bent into the U-shaped cross section mentioned.

According to its use, a plant trough must be produced in various lengths, which may be 8 - 12 meters, depending upon the plant table, upon which the plant trough is to be placed, for which reason a plant trough made from moulded material and with end walls is costly to produce in its finished length with integrated end walls, since each length will require a separate tool. For the same reason, a plant trough made from metal is equally costly to provide with the end walls as integral parts of the plant trough.

In consequence hereof, it is common procedure to produce separate end walls, for example by moulding them from plastic and glue the end walls thus produced into the hollow of a U-shaped profile for a plant trough cut into the desired length.

It is, however, a costly procedure to make a plant trough of arbitrary length with end walls, which are initially made separately and subsequently glued onto or otherwise attached tightly to a U-shaped profile for a plant trough. The costs of placing an end wall is app. DKK 12,- each (beginning 1987) plus mounting costs and glue. In the course of time glued end walls of this kind will result in leaks because of differences in materials and temperature increase coefficients as well as deterioration of glue and plastic.

It is an object of this invention to describe a method of producing a plant trough of arbitrary length with end walls in such a manner that this method can be performed at a far lower price than known up to now.

This will be achieved by a method according to this invention, which method is characteristic in that the first end of the plant trough is formed in a first tool in an apparatus comprising a maximum of four tools placed next to one another, said first tool being provided with cutting means and a first and a second set of folding devices, by removing, using the cutting means, the outermost section corresponding to the distance mentioned, from the side walls, in that a corresponding section is removed along the lengthwise edge of the side walls, in that the outermost part of the bottom is folded in consecutive steps, using the first set of folding devices, in the direction indicated by the side walls along a line, which, reckoned from the said first end of the plant trough, extends at right angles to the longitudinal direction of the plant trough and across the bottom in a distance exceeding the height of the side walls, to produce an end wall extending from the bottom, in that parallel herewith, using the second set of folding devices, the two essentially equilateral triangular corners are folded, said corners being defined in part by the line mentioned and in part by lines in continuation of the edges of the two side walls along the bottom, in such a manner that the diagonal extending from the free corners of the triangular corners are folded either upwards in the direction mentioned or downwards in the opposite direction, in that the consecutive folding steps of the triangles produced by the triangular corners are turned to rest against the inside respectively the outside of the end wall formed, in that in the fourth tool provided with a last set of folding devices, the section corresponding to the mentioned predetermined distance is folded towards respectively away from the hollow of the plant trough and again to rest against the inside respectively the outside of the end wall formed by the folding steps and the part of the triangles located farthest away from the bottom, and in that a corresponding end wall at the opposite end of the plant trough is formed subsequently.

A plant tray of arbitrary, predetermined length is thus produced in an inexpensive way, the method being considerably cheaper than in the prior art, where separately produced end walls have been placed and attached by glueing them into a U-shaped profile for a plant trough. The end wall produced according to this invention is completely tight and remains tight during the entire lifetime of the plant trough, and due to the folding method sharp edges are avoided, which could cause danger to employees in a nursery or during handling otherwise of a plant trough.

For the production of an end wall in a plant trough as described above it may be preferable, as described in Claim 2, to form the end wall in a plant trough in a maximum of four steps, whereupon the plant trough is turned 180° around an axis placed at right angles to the bottom, whereupon an end wall is formed at the opposite end of the plant trough.

The division of the folding procedure into a maximum of four steps has proven advantageous, in part because excessive metal strain is avoided as would have been the case if fewer folding steps had been implemented, and in part because the folding tools may be prepared in a simple way with linear operations only, in contrast to what would have been the case using a single tool, which would require a far more complicated tool with movable and rotatable parts, which at different stages of the folding process should then continue the folding process of the parts for the end walls into the final position. By turning the plant trough 180° around an axis placed at right angles to the bottom before forming the end wall at the opposite end of the plant trough, it is achieved that the formation of the two ends of the trough in one tool only can be done mechanically, the turning being performed in an automatic process.

The invention also relates to an apparatus for the implementation of the method described, which apparatus is characteristic in that the apparatus comprises a maximum of four tools placed next to one another, whereby the first tool is provided with cutting means for the removal of a predetermined section from the outermost part of the side wall at a first end of a plant trough, in that the first tool has a first set of folding devices prepared in consecutive steps to fold the outermost part of the bottom at the mentioned first end in the direction defined by the side walls along a line, which, reckoned from the mentioned first end of the plant trough, extends at right angles to the longitudinal direction of the plant trough and across the bottom at a distance exceeding the height of the side walls to produce an essentially upright end wallat right angles to the bottom, in that the first tool has a second set of folding devices as well, adapted, concurrently with the steps performed by the first set of folding devices, to fold the two essentially equilateral triangular corners defined in part by the mentioned line and in part by lines in continuation of the two edges along the bottom of the side walls in such a manner that the diagonal of the free corners of the triangular corners is folded either upwards in the direction mentioned or downwards in the opposite direction and to turn the triangles produced by the folding of the triangular corners to rest against the inside respectively the outside of the upright end wall, and in that the fourth tool has a last set of folding devices prepared to fold the section of the end wall corresponding to the predetermined length towards respectively away from the hollow of the plant trough and again to rest against the inside respectively the outside of the end wall produced by the folding steps and the part of the triangles farthermost away from the bottom.

It has proven advantageous, as described in Claim 4, where the apparatus comprises a maximum of four tools placed next to each other that between the first and the last tool further tools comprising sets of folding devices have been placed, adapted to perform intermittent folding operations of the said outermost part of the bottom and of the triangular corners, in addition to which the apparatus comprises transport devices prepared to carry an end of a plant trough intermittently through the tools mentioned, as well as means to turn at least one plant trough at a time 180° around an axis placed at right angles to the bottom of the trough and to lead the opposite second end of the plant trough through the apparatus (20).

In addition, it has proven advantageous as described in Claim 5 that the transport devices consist of a sliding device on a guide bar provided with retaining devices to hold a plant trough with one of its ends in place in a position which can be actuated by one of the tools, in addition to which the apparatus has steering devices to move the sliding device intermittently in a working circle with the tools.

Furthermore, it has proven advantageous as described in Claim 6 that the maximum of four tools have been prepared to be actuated hydraulically, either separately or collectively, and that a steering mechanism has been provided to intermittently move the mentioned transport devices for a plant trough through the apparatus depending upon the influences of the mentioned tools from one tool to the next.

The method and the apparatus according to the invention are described in detail with reference to the drawings, in which
Fig. 1 illustrates a finished plant trough with end walls according to the invention, in which the triangles produced by folding have been folded to rest against the inside of the end wall,
Fig. 2 illustrates a horizontal plan of a metal plate formed at one end,
Fig. 3 illustrates the first end of the formed metal plate after the first folding,
Fig. 4 illustrates the final form of the first end after subsequent foldings,
Fig. 5 illustrates a plant trough with the finished first end and the other end being initially.folded with the triangular corners folded towards the inside,
Fig. 6 illustrates an apparatus according to the invention as seen in perspective from a first angle, and

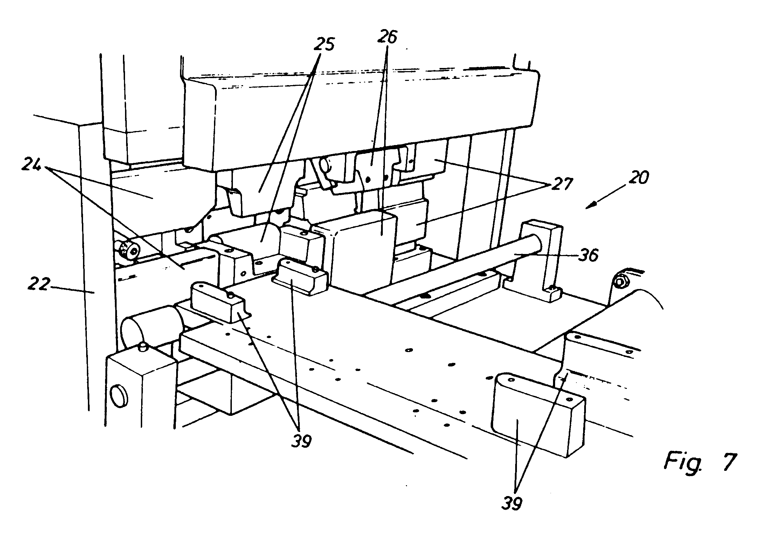

Fig. 7 illustrates the apparatus as shown in fig. 6 as seen from another angle.

The following is a description of the method and the apparatus according to the invention explained by a plant trough, in which the end walls are of equal height to the longitudinal side walls of a plant trough. It will be apparent for a person skilled in the art that it is within the scope of the invention to produce a plant trough fitted with end walls which are lower than the side walls, as the end walls for example could be made half the height of the side walls.

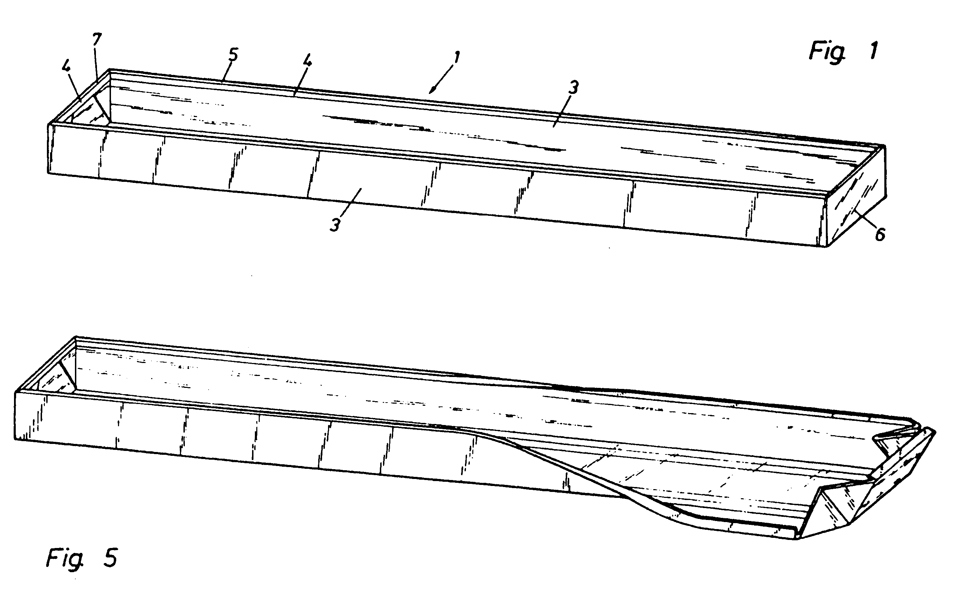

Fig. 1 illustrates an oblong plant trough 1 made of metal, which has an essentially flat bottom 2 and from the bottom 2 two upright longitudinal side walls 3, the plant trough 1 having an essentially U-shaped cross section with adequate divergence for stacking several plant troughs on top of each other, in which the longitudinal edges of the side walls 3 are double along the edge, the free edge of the side walls having been folded to overlap a along a predetermined distance 4. Hereby the free edge 5 of the side walls 3 have been formed with a soft transition and without sharp edges which might cause harm to a user of the plant trough 1.

Plant troughs 1 of this description are used in greenhouses to contain cultivation matter or pots with cultivation matter and plants to be cultivated placed in said pots.

Plant troughs 1 are available in an infinite number of lengths depending upon the space available in the greenhouses and upon the plants to be placed in the plant troughs 1.

Plant troughs for the cultivation of certain plant species, which, at least occasionally, should be soaked in water must necessarily be tight in order to lead water to the cultivation matter for the plants to soak up the moisture necessary for their growth. Until now, to make allowance for the need for plant troughs of individual lengths, end walls have been inserted into essentially U-shaped oblong plant troughs, which have been made in the desired length, and the end walls have been produced separately, for example of plastic, and subsequently secured tightly by adhesives.

In plant trough 1 both end walls 6 have been produced in the procedure according to this invention.

The end walls 6 have such an angle as compared to the bottom 2 as to make stacking of plant troughs possible and along their free edge 7 has been provided with a fold 4 similar to the fold 4 along the free edge 5 of the side walls 3.

The plant trough 1 is hereby along its entire free edge 5,7 provided with a rounded transition everywhere so that there is negligible risk of harm to the employees handling the plant trough 1, and at the same time an inexpensive plant trough 1 has been produced, which is tight and remains tight throughout its entire lifetime and can be produced in every length desirable.

Occasionally, plant troughs 1 are used for the cultivation of plants, in which water in the plant trough is to be drained away from the plant trough so that only the moisture absorbed into the cultivation matter will be at disposal of the plants. It is therefore known art to provide plant troughs 1 with an opening or perhaps several openings 8 in the bottom 2, which may be closed with a plug, either of plastic or corresponding appropriate material. The opening or the openings 8 may be of arbitrary shape like the square shape illustrated in the drawing or they may be drilled holes and according to purpose may be located in the middle of the cross section of the plant trough, on the side of the cross section or possibly even on one of the side wall.

The initial subject for the plant trough 1 is formed by the procedure according to the invention in a number of steps.

The outermost section b of the side walls 3 is removed from an arbitrary end, in the following referred to as a first end, of an initial subject cut off into the desired length, the section b being of equal dimension, as seen from the longitudinal direction of the plant trough, as the fold 4 extending away from the free edge 5 of the side walls 3. A corresponding section c along the end of the longitudinal edge 4 of the side walls 3 is removed.

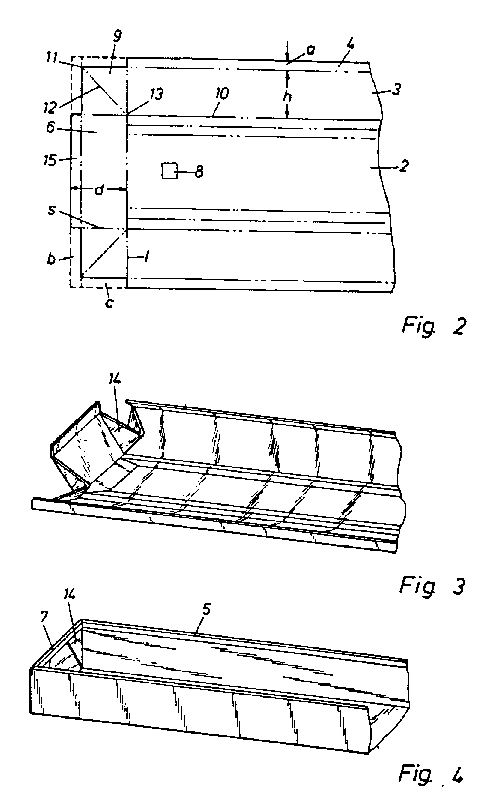

The sections b and c are illustrated in fig. 2.

The formation of the sections b and c can be used if the side walls and the end walls are, or supposed to be, essentially at right angles to the bottom. If these walls are not at right angles to the bottom but tilted slightly outwards, for example 8-10°, in order that several plant troughs may be stacked on top of each other, the sections b and c may deviate from this form described as an example.

Subsequently, a folding is initiated of the end wall 6 along a line 1 extending at right angles to the longitudinal direction of the initial subject in a distance d from the mentioned first end, said distance d being equal to the mentioned fold a of the side walls 3 plus the height h of the side walls 3, that is d = a + h, in addition to which the end wall 6 is folded away from the plane defined by the bottom in the direction towards which the side walls 3 point.

Upon removal of the sections a and b two equilateral triangular corners 9 have been formed at the two corners of the initial subject, defined in part by the mentioned line 1 and in part by the lines s, which are an extension of the edges 10 along the bottom 2 of the two side walls 3.

The triangular corners 9 are parted by the diagonals 12 each reaching from the free corner 11 into the points of intersection 13 between the mentioned lines s and 1.

Parallel to the folding of the end wall 6 the triangular corners 9 are folded in such a manner that the diagonals 12 are folded away from the plane defined by the bottom 2 and in the same direction as the end wall 6 and the side walls 3.

By folding the end wall 6 and triangular corners 9 again triangles 14 will emerge gradually in each corner of the plant trough 1, said triangles consisting of two layers, which are linked together along the diagonals 12, said two triangles 14 as the end wall 6 has been folded to such an extent along the line 1 that the end wall 6 and the side walls 3 are essentially at right angles to the bottom 2, are folded to rest against the inside of the end wall 6.

At this point there will be a section 15 along the end wall 6 which stands out over the lengthwise edges 5 of the side walls 3 in a distance corresponding to the folded section a along the side edges 4.

This section 15 is finally turned in the direction of the hollow of the plant trough 1 and folded further until the section 15 rests against the top edge of the end wall 6 and the triangles 14, whereupon the mentioned first end of the plant trough 1 has been completed.

Subsequently the opposite side of the plant trough is formed in a corresponding way after the plant trough 1 has been turned 180° around an axis, which is at right angles to the plane of the bottom 2.

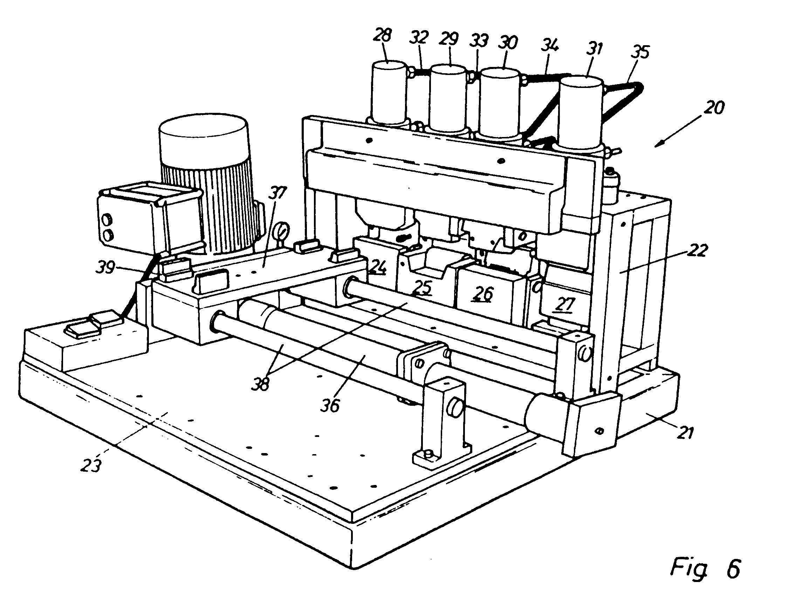

For the implementation of the procedure according to the invention the apparatus 20 shown in fig. 6 has been provided.

The apparatus 20 comprises a framework 21 prepared to absorb the power exerted on a plant trough 1 for the implementation of the method. A frame 22 has been placed in the framework 21, and in the working position of the apparatus, an essentially horizontal bed 23 connected to the frame 22.

In the frame 22 a number of preferably four tools 24, 25, 26 and 27 have been placed in sequence.

The first tool 24 comprises cutting means to remove the mentioned sections a and b from one end of the initial subject to a plant trough 1, as well as a first and a second set of folding devices for an initial folding of the and wall 6 and the triangular corners 9 as described above.

The fourth tool 27 comprises a last set of folding devices prepared to fold the section 15 at the end wall 6 towards the hollow of the plant trough 1 and again to rest against the top part of the side walls 6 and the triangles 14.

The second and the third tool 25, 26 comprise further folding devices prepared to perform foldings to be carried out between the initial folding in the first tool 24 and the final foldings in the fourth tool of the end wall 6 of a plant trough 1.

The four tools 24 - 27 are preferably driven by hydraulic cylinders 28, 29, 30 and 31, the compression means being supplied to the cylinders 28 - 31 through tubes 32, 33, 34 and 35, which again supplied from an unspecified compression source.

A sliding device 37 has been placed on a guide bar 36 on the bed 23, said sliding device having been prepared to slide intermittently along the four tools 24 - 27 placed in sequence by means of a compression cylinder 38.

The sliding device 37 has been provided with retaining devices 39 prepared to secure one end of an initial subject for a plant trough 1 in such a manner that the mentioned end will reach into the working area of the four tools 24 - 27, as the length of the initial subject must necessarily exceed a predetermined minimal length of a plant trough 1.

The intermittent sliding is adjusted by means of steering mechanisms, which are not illustrated in detail, in order that the mentioned end of the initial subject is prepared successively in the four tools 24 - 27.

After the completion of the first end of the initial subject in the four tools by the formation of an end wall 6, the initial subject is removed from one side of the apparatus 20 and transferred to a table, which is not illustrated on the drawing, where the initial subject can be turned 180° around an axis at right angles to the bottom 2, whereupon the opposite end of the initial subject is carried through the apparatus 20.

The apparatus 20 has been prepared either to process one end of a subject intermittently as needed, as the end of the subject is led successively from one tool to the next, and the other end is subjected to the same process, each end of the subject being carried into the first tool, as the previous subject has been processed in the first tool and carried to the next and so on, whereupon a number of subjects, completed in the first end simultaneously can be turned and subsequently carried into the apparatus 20 with the opposite other end.

While the preceding refers to four tools 24 - 27 to prepare an initial subject for the formation of end walls 6 in a plant trough 1, it is not to be considered as a limitation, since the number of tools may vary depending upon the flexibility and the deep tension power of the metal preferred for the production of a plant trough 1.

In addition, it will be apparent to a person skilled in the art that although the procedure and the apparatus according to this invention have been explained on the basis of a plant trough, where the triangles produced by the folding have been folded to rest against the inside of the end walls, said triangles may alternatively be folded towards the outside of the end walls.

## Claims

1. Method of producing an oblong plant trough with end walls, the plant trough (1) having an essentially flat bottom (2) and two parallel lengthwise side walls (3) extending from the bottom, and the lengthwise edges (4), as seen in cross section, having been doublefolded along a predetermined distance (d-h), and the plant through being of metal and having been formed from a flat sheet by means of a tool with folding devices, **characterized in** that the first end of the plant trough (1) is formed in a first tool (24) in an apparatus (20) comprising a maximum of four tools (24, 25,26,27) placed next to one another, said first tool being provided with cutting means and a first and a second set of folding devices, by removing, using the cutting means, the outermost section (b) corresponding to the distance (d-h) mentioned, from the side walls (3), in that a corresponding section (c) is removed along the lengthwise edge (4) of the side walls (3), in that the outermost part of the bottom is folded in consecutive steps, using the first set of folding devices, in the direction indicated by the side walls along a line (1), which, reckoned from the said first end of the plant trough (1), extends at right angles to the longitudinal direction of the plant trough (1) and across the bottom (2) in a distance (d) exceeding the height of the side walls (3), to produce an end wall extending from the bottom, in that parallel herewith, using the second set of folding devices, the two essentially equilateral triangular corners are folded (9), said corners being defined in part by the line (1) mentioned and in part by lines (s) in continuation of the edges (10) of the two side walls (3) along the bottom (2), in such a manner that the diagonal (12) extending from the free corners (11) of the triangular corners (9) are folded either upwards in the direction mentioned or downwards in the opposite direction, in that the consecutive folding steps of the triangles (14) produced by the triangular corners (9) are turned to rest against the inside respectively the outside of the end wall (6) formed, in that in the fourth tool (27) provided with a last set of folding devices, the section (15) corresponding to the mentioned predetermined distance (d-h) is folded towards respectively away from the hollow of the plant trough and again to rest against the inside respectively the outside of the end wall (6) formed by the folding steps and the part of the triangles (14) located farthest away from the bottom (2), and in that a corresponding end wall (6) at the opposite end of the plant trough (1) is formed subsequently.

2. Method according to Claim 1, **characterized in** that an end wall (6) having been formed in a first end of a plant trough (1), the plant trough (1) is turned 180° around an axis placed at right angles to the bottom (2), whereupon the end wall (6) is formed at the opposite end of the plant trough (1).

3. Apparatus for the implementation of the method described in Claim 1 to provide an oblong plant trough (1) with end walls (6) said plant trough (1) having an essentially flat bottom (2) and extending from the bottom (2) two parallel lengthwise side walls (3), the lengthwise edges (4) of said side walls, as seen in cross section, being doublefolded along a predetermined distance (d-h), whereby the plant trough (1) is made of metal and has been formed from a flat sheet by means of a tool provided with folding devices, **characterized in** that the apparatus (20) comprises a maximum of four tools (24, 25,26,27) placed next to one another, whereby the first tool (24) is provided with cutting means for the removal of a predetermined section (b) from the outermost part of the side wall (3) at a first end of a plant trough (1), in that the first tool (24) has a first set of folding devices prepared in consecutive steps to fold the outermost part of the bottom (2) at the mentioned first end in the direction defined by the side walls (3) along a line, which, reckoned from the mentioned first end of the plant trough (1), extends at right angles to the longitudinal direction of the plant trough and across the bottom at a distance exceeding the heigh (h) of the side walls (3) to produce an essentially upright end wall at right angles to the bottom (2), in that the first tool (24) has a second set of folding devices as well, adapted, concurrently with the steps performed by the first set of folding devices, to fold the two essentially equilateral triangular corners (9) defined in part by the mentioned line (1) and in part by lines in continuation of the two edges along the bottom (2) of the side walls (3) in such a manner that the diagonal of the free corners of the triangular corners (9) is folded either upwards in the direction mentioned or downwards in the opposite direction and to turn the triangles (14) produced by the folding of the triangular corners (9) to rest against the inside respectively the outside of the upright end wall (6), and in that the fourth tool (27) has a last set of folding devices prepared to fold the section (15) of the end wall (6) corresponding to the predetermined length (d-h) towards respectively away from the hollow of the plant trough (1) and again to rest against the inside respectively the outside of the end wall (6) produced by the folding steps and the part of the triangles (14) farthermost away from the bottom (2).

4. Apparatus according to Claim 3, wherein the apparatus (20) comprises a maximum of four tools (24, 25, 26 and 27) placed next to each other, **characterized in** that between the first and the last tool further tools (25,26) comprising sets of folding devices have been placed, adapted to perform intermittent folding operations of the said outermost part of the bottom (2) and of the triangular corners (9), in addition to which the apparatus (20) comprises transport devices (36,37,38,39) prepared to carry an end of a plant trough (1) intermittently through the tools (24,25,26,27) mentioned, as well as means to turn at least one plant trough at a time 180° around an axis placed at right angles to the bottom (2) of the trough (1) and to lead the opposite second end of the plant trough (1) through the apparatus (20).

5. Apparatus according to Claims 3 - 4, **characterized in** that the transport devices (36,37,38,39) consist of a sliding device (37) on a guide bar provided with retaining devices (39) to hold a plant trough (1) with one of its ends in place in a position which can be actuated by one of the tools (24,25,26,27), in addition to which the apparatus (20) has steering devices to move the sliding device (37) intermittently in a working circle with the tools (24,25,26,27).

6. Apparatus according to Claims 3 - 5, **characterized in** that the maximum of four tools (24,25,26,27) have been prepared to be actuated hydraulically (28,29,30,31), either separately or collectively, and that a steering mechanism has been provided to intermittently move the mentioned transport devices (36,37,38,39) for a plant trough (1) through the apparatus (20) depending upon the influences of the mentioned tools (24,25,26,27) from one tool to the next.

## Patentansprüche

1. Verfahren zur Herstellung eines länglichen Pflanzenkübels mit Abschlußwänden, wobei der Pflanzenkübel (1) einen im wesentlichen flachen Boden (2) und zwei parallele, längs verlaufende Seitenwände (3) hat, die sich vom Boden erstrecken, und die Längskanten (4), im Querschnitt gesehen, über eine vorgegebene Länge (d-h) doppelt gefalzt sind und der Pflanzenkübel aus Metall besteht und mittels eines Werkzeugs mit Falzeinrichtungen aus einem flachen Blech geformt wurde, **dadurch gekennzeichnet,** daß das erste Ende des Pflanzenkübels (1) in einem ersten Werkzeug (24) in einer Vorrichtung (20), die maximal vier Werkzeuge (24, 25, 26, 27) umfaßt, die nebeneinander angeordnet sind, wobei das erste Werkzeug mit einer Schneideinrichtung und einer ersten und einer zweiten Gruppe von Falzeinrichtungen versehen ist, geformt wird, indem durch den Einsatz der Schneideinrichtung, der äußerste Abschnitt (b), der der Länge (d-h) entspricht, von den Seitenwänden (3) entfernt wird, indem ein entsprechender Abschnitt (c) an der Längskante (4) der Seitenwände (3) entfernt wird, indem unter Verwendung der ersten Gruppe von Falzeinrichtungen der äußere Teil des Bodens in aufeinanderfolgenden Knicken in der durch die Seitenwände angezeigten Richtung an einer Linie (1), die, vom ersten Ende des Pflanzenkübels (1) aus gesehen, im rechten Winkel zur Längsrichtung des Pflanzenkübels (1) verläuft, und über den Boden (2) in einer Länge (d), die die Höhe der Seitenwände (3) überschreitet, gefalzt wird, so daß eine sich vom Boden erstreckende Abschlußwand entsteht, indem parallel dazu unter Einsatz der zweiten Gruppe der Falzeinrichtungen, die beiden im wesentlichen gleichseitig dreieckigen Ecken gefalzt werden (9), wobei die Ecken teilweise durch die Linie (1) und teilweise durch Linien (s) als Fortsetzung der Kanten (10) der beiden Seitenwände (3) am Boden (2) entlang so gebildet werden, daß die Diagonale (12), die von den freien Ekken (11) der dreieckigen Ecken (9) gebildet wird, entweder in der erwähnten Richtung nach oben gefalzt werden oder in entgegengesetzter Richtung nach unten gefalzt werden, so daß die aufeinanderfolgenden Falzknicke der Dreiecke (14), die durch die dreieckigen Ecken (9) gebildet werden, gebogen werden, so daß sie an der Innenseite beziehungsweise an der Außenseite der geformten Abschlußwand (6) anliegen, indem im vierten Werkzeug (27), das mit einer letzten Gruppe von Falzeinrichtungen versehen ist, der der vorgegebenen Länge (d-h) entsprechende Abschnitt (15) auf die Vertiefung des Pflanzenkübels zu beziehungsweise von ihr weg gefalzt wird und wiederum an der Innenseite beziehungsweise an der Außenseite der Abschlußwand (6) anliegt, die durch die Falzknicke und den Teil der Dreiecke (14), der am weitesten vom Bo-den (2) entfernt ist, gebildet wird, und indem anschließend eine entsprechende Endwand (6) am gegenüberliegenden Ende des Pflanzenkübels (1) geformt wird.

2. Verfahren nach Anspruch 1, **dadurch gekennzeichnet**, daß, nachdem eine Abschlußwand (6) an einem ersten Ende des Pflanzenkübels (1) geformt wurde, der Pflanzenkübel (1) um 180° um eine Achse gedreht wird, die sich im rechten Winkel zum Boden (2) befindet, woraufhin die Abschlußwand (6) am gegenüberliegenden Ende des Pflanzenkübels (1) geformt wird.

3. Vorrichtung zur Ausführung des in Anspruch 1 beschriebenen Verfahrens zur Schaffung eines länglichen Pflanzenkübels (1) mit Abschlußwänden (6), wobei der Pflanzenkübel (1) einen im wesentlichen flachen Boden (2) hat, und zwei parallele, längs verlaufende Seitenwände (3), die sich vom Boden (2) aus erstrecken, wobei die Längskanten (4) der Seitenwände, im Querschnitt gesehen, über eine vorgegebene Länge (d-h) doppelt gefalzt sind, wobei der Pflanzenkübel (1) aus Metall besteht und mittels eines Werkzeugs, das mit Falzeinrichtungen versehen ist, aus einem flachen Blech geformt wurde, **dadurch gekennzeichnet,** daß die Vorrichtung (20) maximal vier Werkzeuge (24, 25, 26, 27) umfaßt, die nebeneinander angeordnet sind, wobei das erste Werkzeug (24) mit einer Schneideinrichtung zur Entfernung eines vorgegebenen Abschnittes (b) vom äußersten Teil der Seitenwand (3) an einem ersten Ende des Pflanzenkübels (1) versehen ist, wobei das erste Werkzeug (24) eine erste Gruppe von Falzeinrichtungen hat, die den äußersten Teil des Bodens (2) am ersten Ende in der durch die Seitenwände (3) bestimmten Richtung entlang einer Linie, die vom ersten Ende des Pflanzenkübels (1) aus gesehen, in rechtem Winkel zur Längsrichtung des Pflanzenkübels verläuft, und über den Boden, in einer Länge, die die Höhe (h) der Seitenwände (3) überschreitet, falzt, so daß eine im wesentlichen aufrechtstehende Abschlußwand im rechten Winkel zum Boden (2) erzeugt wird, wobei das erste Werkzeug (24) auch eine zweite Gruppe von Falzeinrichtungen hat, die gleichzeitig mit den von der ersten Gruppe der Falzeinrichtungen ausgeführten Schritten die zwei im wesentlichen gleichseitig dreieckigen Ecken (9), die teilweise durch die Linie (1) und teilweise durch Linien in Verlängerung der beiden Kanten am Boden (2) der Seitenwände (2) gebildet werden, so falzt, daß die Diagonale der freien Ecken der dreiekkigen Ecken (9) entweder in der erwähnten Richtung nach oben oder in der entgegengesetzten Richtung nach unten gefalzt werden, und die die Dreiecke (14), die durch das Falzen der dreiekkigen Ecken (9) entstanden sind, biegt, so daß sie an der Innenseite beziehungsweise an der Außenseite der aufrechtstehenden Abschlußwand (6) anliegen, und wobei das vierte Werkzeug (27) wenigstens eine Gruppe von Falzeinrichtungen hat, die den Abschnitt (15) der Abschlußwand (6), der der vorgegebenen Länge (d-h) entspricht, auf die Vertiefung des Pflanzkübels (1) zu beziehungsweise von ihr weg falzen, so daß er wiederum an der Innenseite beziehungsweise der Außenseite der Abschlußwand (6) anliegt, die durch die Falzknicke und den vom Boden (2) am weitesten entfernten Teil der Dreiecke (14) gebildet wird.

4. Vorrichtung nach Anspruch 3, wobei die Vorrichtung (20) maximal vier Werkzeuge (24, 25, 26 und 27) umfaßt, die nebeneinander angeordnet sind, **dadurch gekennzeichnet**, daß zwischen dem ersten und dem letzten Werkzeug, weitere Werkzeuge (25, 26) angebracht sind, die Gruppen von Falzeinrichtungen umfassen, die Zwischen-Falzvorgänge des äußersten Teils des Bodens (2) und der dreieckigen Ecken (9) ausführen, wobei die Vorrichtung (20) darüberhinaus Transporteinrichtungen (36, 37, 38, 39) umfaßt, die ein Ende des Pflanzenkübels (1) schrittweise durch die Werkzeuge (24, 25, 26, 27) transportieren, sowie eine Einrichtung, die wenigstens einen Pflanzenkübel auf einmal 180° um eine Achse dreht, die im rechten Winkel zum Boden (2) des Kübels (1) liegt, und die das gegenüberliegende zweite Ende des Pflanzenkübels (1) durch die Vorrichtung (20) leitet.

5. Vorrichtung nach Anspruch 3 - 4, **dadurch gekennzeichnet**, daß die Transporteinrichtungen (36, 37, 38, 39) aus einer Gleiteinrichtung (37) auf einer Führungsschiene bestehen, die mit Halteeinrichtungen (39) versehen ist, um einen Pflanzenkübel (1) in einer Position zu halten, bei der sich sein eines Ende in einer Stellung befindet, in der es von einem der Werkzeuge (24,25,26,27) bearbeitet werden kann, und wobei die Vorrichtung (20) darüberhinaus Steuereinrichtungen hat, die die Gleiteinrichtung (37) schrittweise in einem Arbeitszyklus mit den Werkzeugen (24, 25, 26, 27) bewegen.

6. Vorrichtung nach Anspruch 3 - 5, **dadurch gekennzeichnet**, daß die maximal vier Werkzeuge (24, 25, 26, 27) entweder einzeln oder zusammen hydraulisch (28, 29 30, 31) betätigt werden können, und daß ein Steuermechanismus vorhanden ist, der die Transporteinrichtungen (36, 37, 38, 39) bei einen Pflanzenkübel (1) in Abhängigkeit von den Einflüssen der Werkzeuge (24, 25, 26, 27) schrittweise von einem Werkzeug zum nächsten durch die Vorrichtung (20) bewegt.

## Revendications

1. Procédé de fabrication d'un bac à plante oblong avec des parois d'extrémité, le bac à plante (1) ayant un fond essentiellement plat (2) et deux parois latérales parallèles dans le sens de la longueur (3) s'étendant depuis le fond, et les bords (4) dans le sens de la longueur, vus en coupe, ayant été pliés deux fois sur une distance prédéterminée (d-h), et le bac à plante étant en métal et ayant été formé à partir d'une tôle plate au moyen d'un outil avec des dispositifs de pliage, caractérisé en ce que la première extrémité du bac à plante (1) est formée avec un premier outil (24) dans un appareil (20) comportant un maximum de quatre outils (24, 25, 26, 27) placés l'un à la suite de l'autre, ledit premier outil étant pourvu de moyens de coupe et d'un premier et d'un deuxième ensemble de dispositifs de pliage, pour enlever des parois latérales (3), la section la plus à l'extérieur (b) correspondant à la distance (d-h) mentionnée, en utilisant les moyens de coupe, en ce qu'une section correspondante (c) est enlevée sur le bord dans le sens de la longueur (4) des parois latérales (3), en ce que la section la plus à l'extérieur du fond est pliée par étapes successives, en utilisant le premier ensemble de dispositifs de pliage, dans la direction indiquée par les parois latérales le long d'une ligne (1) qui, en partant de ladite première extrémité du bac à plante (1), s'étend à angle droit par rapport à la direction longitudinale du bac à plante (1) et transversalement au fond (2) sur une distance (d) dépassant la hauteur des parois latérales (3), de façon à produire une paroi d'extrémité s'étendant depuis le fond, en ce que, parallèlement à celà, en utilisant le deuxième ensemble de dispositifs de pliage, les deux coins triangulaires essentiellement équilatéraux (9) sont pliés, lesdits coins étant définis en partie par la ligne (1) mentionnée et en partie par des lignes (s) dans le prolongement des bords (10) des deux parois latérales (3) le long du fond (2), de manière à ce que la diagonale (12) s'étendant depuis les coins libres (11) des coins triangulaires (9) est pliée vers le haut dans la direction mentionnée ou bien vers le bas dans la direction opposée, en ce que dans les étapes de pliage consécutives, les triangles (14) produits par les coins triangulaires (9), sont rabattus afin de reposer respectivement contre l'intérieur, respectivement l'extérieur, de la paroi d'extrémité (6) formée, en ce que, dans le quatrième outil (27) pourvu d'au moins un ensemble de dispositifs de pliage, la section (15) correspondant à la distance prédeterminée mentionnée (d-h) est pliée vers, respectivement à l'opposé, du creux du bac à plante et est pliée afin de reposer contre l'intérieur, respectivement l'extérieur, de la paroi d'extrémité (6) formée par les étapes de pliage et la partie des triangles (14) située le plus loin du fond (2), et en ce que une paroi d'extrémité correspondante (6) à l'extrémité opposée du bac à plante (1) est formée ensuite.

2. Procédé selon la revendication 1, caractérisé en ce que, une paroi d'extrémité (6) ayant été formée dans une première extrémité d'un bac à plante (1), le bac à plante (1) est retourné à 180° autour d'un axe placé à angle droit par rapport au fond (2), à la suite de quoi la paroi d'extrémité (6) est formée à l'extrémité opposée du bac à plante (1).

3. Appareil pour la mise en oeuvre du procédé de la revendication 1 afin de réaliser un bac à plante oblong (1) avec des parois d'extrémité (6), ledit bac à plante (1) ayant un fond essentiellement plat (2) et deux parois latérales parallèles dans le sens de la longueur (3) qui s'étendent depuis le fond (2), les bords dans le sens de la longueur (4) desdites parois latérales, vus en coupe, étant pliés deux fois sur une distance prédéterminée (d-h), le bac à plante (1) étant réalisé en métal et ayant été formé à partir d'une tôle plate au moyen d'un outil pourvu de dispositifs de pliage, caractérisé en ce que l'appareil (20) comporte un maximum de quatre outils (24, 25, 26, 27) placés l'un à la suite de l'autre, le premier outil (24) étant pourvu de moyens de coupe pour l'enlèvement d'une section prédéterminée (b) de la partie la plus à l'extérieur de la paroi latérale (3) au niveau d'une première extrémité d'un bac à plante (1), en ce que le premier outil (24) possède un premier ensemble de dispositifs de pliage préparés par étapes successives de façon à plier la partie la plus à l'extérieur du fond (2) au niveau de la première extrémité mentionnée dans la direction définie par les parois latérales (3) le long d'une ligne qui, en partant de la première extrémité mentionnée du bac à plante (1), s'étend à angle droit par rapport à la direction longitidinale du bac à plante et transversalement au fond sur une distance dépassant la hauteur (h) des parois latérales (3) de façon à produire une paroi d'extrémité essentiellement verticale à angle droit par rapport au fond (2), en ce que le premier outil (24) possède également un deuxième ensemble de dispositifs de pliage prévu, concurremment aux étapes réalisées par le premier ensemble de dispositifs de pliage, pour plier les deux coins triangulaires essentiellement équilatéraux (9) définis en partie par la ligne (1) mentionnée et en partie par des lignes dans le prolongement des deux bords le long du fond (2) des parois latérales (3) d'une manière telle que la diagonale des coins libres des coins triangulaires (9) est pliée vers le haut dans la direction mentionnée ou bien vers le bas dans la direction opposée et afin de rabattre les triangles (14) produits par le pliage des coins triangulaires (9) de façon à reposer contre l'intérieur, respectivement l'extérieur, de la paroi d'extrémité verticale (6), et en ce que le quatrième outil (27) possède au moins un ensemble de dispositifs de pliage préparés afin de plier la section (15) de la paroi d'extrémité (6) correspondant à la longueur prédéterminée (d-h) vers, respectivement à l'opposé, du creux du bac à plante (1) et de plier de nouveau afin de reposer contre l'intérieur, respectivement l'extérieur, de la paroi d'extrémité (6) produite par les étapes de pliage et la partie des triangles (14) le plus loin du fond (2).

4. Appareil selon la revendication 3, dans lequel l'appareil (20) comporte un maximum de quatre outils (24, 25, 26 et 27) placés l'un à la suite de l'autre, caractérisé en ce que, entre le premier et le dernier outil, sont placés d'autres outils (25, 26) comportant des ensembles de dispositifs de pliage et prévus pour réaliser des opérations de pliage intermittentes de ladite partie la plus à l'extérieur du fond (2) et des coins triangulaires (9), l'appareil (20) comportant en plus des dispositifs de transport (36, 37, 38, 39) préparés de façon à transporter une extrémité d'un bac à plante (1) de manière intermittente à travers les outils (24, 25, 26, 27) mentionnés, ainsi que des moyens destinés à retourner au moins un bac à plante sur 180° autour d'un axe placé à angle droit par rapport au fond (2) du bac (1) et destinés a conduire la deuxième extrémité opposée du bac à plante (1) à travers l'appareil (20).

5. Appareil selon les revendications 3 et 4, caractérisé en ce que les dispositifs de transport (36, 37, 38, 39) se composent d'un dispositif coulissant (37) sur une barre de guidage pourvue de moyens de maintien (39) destinés à maintenir un bac à plante (1) avec une de ses extrémités en place dans une position qui peut être actionnée par un des outils (24, 25, 26, 27), l'appareil (20) comportant en plus des dispositifs d'orientation destinés à déplacer le dispositif coulissant (37) de façon intermittente sur un cercle de travail avec les outils (24, 25, 26, 27).

6. Appareil selon les revendications 3 à 5, caractérisé en ce que le maximum de quatre outils (24, 25, 26, 27) a été préparé de façon à être actionné hydrauliquement (28, 29, 30, 31), séparément ou bien de manière collectives, et en ce que un mécanisme d'orientation a été prévu de façon à déplacer de manière intermittente les dispositifs de transport mentionnés (36, 37, 38, 39) pour un bac à plante (1) à travers l'appareil (20) d'un outil vers le suivant en fonction des influences des outils mentionnés (24, 25, 26, 27).
